# EUROPÄISCHE PATENTSCHRIFT

(11) **EP 4 353 991 B1**
(45) Veröffentlichungstag und Bekanntmachung des Hinweises auf die Patenterteilung: **04.03.2026**
(21) Anmeldenummer: 23202785.4
(22) Anmeldetag: 10.10.2023
(51) Int. Cl.: F16H 19/00, B25J 9/10, F16H 19/06

(54) **GETRIEBEANORDNUNG SOWIE ROBOTER MIT EINER GETRIEBEANORDNUNG**
TRANSMISSION ASSEMBLY AND ROBOT HAVING A TRANSMISSION ASSEMBLY
ENSEMBLE DE TRANSMISSION ET ROBOT DOTÉ D'UN ENSEMBLE DE TRANSMISSION

(30) Priorität: 11.10.2022 DE 102022126377
(43) Veröffentlichungstag der Anmeldung: 17.04.2024
(73) Patentinhaber: Neura Robotics GmbH, 72555 Metzingen (DE)
(72) Erfinder: Ezechias, Josef, 71083 Herrenberg (DE); Göz, Jannik, 72458 Albstadt (DE); Reger, David, 72555 Metzingen (DE)
(74) Vertreter: Westphal, Mussgnug & Partner Patentanwälte mbB

(56) Entgegenhaltungen:
- WO-A1-2020/148705
- JP-A- S60 263 761
- NL-C1- 1 003 704
- US-A- 2 854 854

## Beschreibung

Die Erfindung betrifft eine Getriebeanordnung sowie einen Roboter mit einer Getriebeanordnung.

Zur Änderung der Orientierung der Drehachse in mechanischen Antriebssträngen sind verschiedene Konzepte von Winkelgetrieben bekannt. Dazu zählen unter anderem Kegelradstufen und Riementriebe.

Kegelradstufen stellen unter anderem in der Robotik ein verbreitetes Getriebekonzept zur Änderung der Orientierung der Drehachsen dar. Insbesondere werden sie zum Antrieb der Achsen von Knickarmrobotern verwendet. Kegelradstufen sind jedoch schwer und spielbehaftet. Diese nachteiligen Eigenschaften haben Kegelradstufen mit anderen Zahnradgetrieben gemein.

Riementrieben verwenden meist Riemen mit einem trapezförmigen Querschnitt. Zur Änderung der Orientierung der Drehachse ist bei Riementrieben daher in der Regel eine abschnittsweise Verdrehung des Riemens um die Riemenlängsachse erforderlich. Eine derartige Verdrehung des Riemens erfordert einen freien Abschnitt des Trums, in dem die Verdrehung stattfindet, sodass entsprechend große Achsabstände realisiert werden müssen. Ein Winkelgetriebe auf Basis eines Riementriebs beansprucht daher einen vergleichsweise großen Bauraum. Darüber hinaus weisen Riementriebe im Vergleich zu alternativen Getriebekonzepten eine relativ geringe Steifigkeit auf. Diese Nachteile machen sie insbesondere für einen Einsatz in der Robotik unattraktiv.

Als druckschriftlicher Stand der Technik werden die NL 1 003 704 C1, die US 2 854 854 A, die WO 2020/148705 A1 sowie die JP S60 263761 A genannt.

Der Erfindung liegt die Aufgabe zugrunde, eine Getriebeanordnung bereitzustellen, die sich zur Änderung der Orientierung der Drehachse eignet und eine hohe Steifigkeit sowie einen geringen Bauraumbedarf bei gleichzeitiger Spielfreiheit und geringem Gewicht aufweist. Außerdem soll die Getriebeanordnung kostengünstig und einfach herstellbar sein.

Der Erfindung liegt außerdem die Aufgabe zugrunde, einen Roboter bereitzustellen, der hochdynamische Bewegungen ausführen kann, gleichzeitig einen geringen Bauraumbedarf aufweist und kostengünstig und einfach herstellbar ist.

Die Aufgabe wird erfindungsgemäß gelöst durch eine Getriebeanordnung mit den Merkmalen des Patentanspruchs 1 sowie einen Roboter mit den Merkmalen des Anspruchs 15.

Vorteilhafte Ausgestaltungen und Weiterbildungen der Erfindung sind in den abhängigen Ansprüchen angegeben.

Eine erfindungsgemäße Getriebeanordnung umfasst einen Antriebskörper mit mindestens einer um eine Antriebsachse drehbar angeordneten antriebsseitigen Trommel, sowie einen Abtriebskörper mit mindestens einer um eine Abtriebsachse drehbar angeordneten abtriebsseitigen Trommel. Darüber hinaus umfasst die Getriebeanordnung mindestens ein Seil, das auf der mindestens einen antriebsseitigen Trommel sowie auf der mindestens einen abtriebsseitigen Trommel aufwickelbar ist, und ein antriebsseitiges Seilende sowie ein abtriebsseitiges Seilende aufweist. Das antriebsseitige Seilende ist an der mindestens einen antriebsseitigen Trommel und das abtriebsseitige Seilende ist an der mindestens einen abtriebsseitigen Trommel angeordnet.

Durch Drehen der mindestens einen antriebsseitigen Trommel um die Antriebsachse kann somit die Drehzahl und das Drehmoment über das mindestens eine Seil auf die mindestens eine abtriebsseitige Trommel übertragen werden. Unter einer Trommel wird hier und im Folgenden vorzugsweise ein Körper mit einer zylindrischen Grundform verstanden. Darüber hinaus kann eine Trommel aber auch durch einen anderen um eine Längsachse drehbaren Körper gebildet werden, der zum Aufwickeln des mindestens einen Seils vorgesehen und/oder geeignet ist. Die Drehwinkel der mindestens einen antriebsseitigen Trommel und der mindestens einen abtriebsseitigen Trommel können dabei insbesondere durch die Länge des mindestens einen Seils begrenzt sein. Unter einem Seil wird hier und im Folgenden vorzugsweise eine längliche, auf Zug belastbare Struktur verstanden, die - insbesondere im Unterschied zu einem Riemen - einen im Wesentlichen runden Querschnitt aufweist. Damit kann vorzugsweise auf eine Verdrehung des mindestens einen Seils zur Änderung der Orientierung der Drehachse verzichtet werden. Ferner kann das Seil eine besonders hohe Steifigkeit aufweisen.

Ein Übersetzungsverhältnis der Getriebeanordnung kann durch den Quotienten aus dem Durchmesser der mindestens einen abtriebsseitigen Trommel und dem Durchmesser der mindestens einen antriebsseitigen Trommel gebildet werden. Ein maximaler Drehwinkel der mindestens einen abtriebsseitigen Trommel kann - neben der Länge des mindestens einen Seils - insbesondere von dem Übersetzungsverhältnis abhängig sein. So beträgt der maximale Drehwinkel der mindestens einen abtriebsseitigen Trommel bei einem Übersetzungsverhältnis von 1 vorzugsweise 360°. Bei einem Übersetzungsverhältnis von 2 kann der maximale Drehwinkel der mindestens einen abtriebsseitigen Trommel beispielsweise 180° betragen.

Vorzugsweise ist der Antriebskörper zusammen mit der mindestens einen antriebsseitigen Trommel um die Antriebsachse drehbar. Dementsprechend kann auch der Abtriebskörper zusammen mit der mindestens einen abtriebsseitigen Trommel um die Abtriebsachse drehbar sein. Der Antriebskörper und/oder der Abtriebskörper können insbesondere als Rad ausgebildet sein.

Zur Rückstellung der Getriebeanordnung kann die Getriebeanordnung beispielsweise ein Federelement umfassen, das bei der Einleitung von Drehzahl und Drehmoment in die Getriebeanordnung mittels der mindestens einen antriebsseitigen Trommel vorgespannt wird. Insbesondere kann die mindestens eine abtriebsseitige Trommel gegen das Federelement gelagert sein.

Vorzugsweise liegt das mindestens eine Seil mit einem Kontaktumfang gleichzeitig an der mindestens einen antriebsseitigen Trommel und der mindestens einen abtriebsseitigen Trommel an. Dadurch können die mindestens eine antriebsseitige Trommel und die mindestens eine abtriebsseitige Trommel sehr nahe beieinander angeordnet werden. Damit kann der von der Getriebeanordnung beanspruchte Bauraum reduziert werden. Unter dem Kontaktumfang soll eine gedachte Umfangslinie des Seils an einer Position bezüglich der Seilmittellinie verstanden werden. Der Kontaktumfang kann den Wendepunkt des an der mindestens einen antriebsseitigen Trommel und der mindestens einen abtriebsseitigen Trommel anliegenden mindestens einen Seils markieren. Bezüglich der beteiligten Trommeln können eine gedachte Tangente der mindestens einen antriebsseitigen Trommel, die auf der Seilmittellinie angeordnet ist, und eine gedachte Tangente der mindestens einen abtriebsseitigen Trommel, die auf der Seilmittellinie angeordnet ist, an der Position des Kontaktumfangs deckungsgleich sein.

Die Getriebeanordnung kann auch einen auf die Seilmittellinie bezogenen Kontaktbereich aufweisen, in dem das mindestens eine Seil gleichzeitig an der mindestens einen antriebsseitigen Trommel und der mindestens einen abtriebsseitigen Trommel anliegt, und der einerseits von einem ersten Kontaktumfang und andererseits von einem zweiten Kontaktumfang begrenzt wird. Der Kontaktbereich kann sich insbesondere aufgrund von elastischer Verformung der beteiligten Komponenten ausbilden.

Die Antriebsachse und die Abtriebsachse können einen winkligen Achsenversatz zueinander aufweisen. Dadurch kann mittels der Getriebeanordnung eine Änderung der Orientierung der Drehachse auf möglichst kleinem Bauraum realisiert werden. Vorzugsweise schneiden sich die Antriebsachse und die Abtriebsachse in einem gemeinsamen Achsenschnittpunkt. Besonders bevorzugt beträgt der winklige Achsenversatz zwischen der Antriebsachse und der Abtriebsachse 90°.

Das antriebsseitige Seilende kann an der mindestens einen antriebsseitigen Trommel und/oder das abtriebsseitige Seilende kann an der mindestens einen abtriebsseitigen Trommel formschlüssig und/oder reibschlüssig befestigt sein. Dies ermöglicht die Realisierung der Getriebeanordnung mit dem mindestens einen, zwei Seilenden aufweisenden Seil. Insbesondere kann auf den Einsatz eines Endlosseiles, also eines in sich geschlossenen Seiles, verzichtet werden. Darüber hinaus können externe und interne Reibungsverluste des mindestens einen Seils verringert werden. Bevorzugt ist das jeweilige Seilende an der mindestens einen antriebsseitigen Trommel und/oder an der mindestens einen abtriebsseitigen Trommel angeschraubt. Alternativ kann das antriebsseitige Seilende an der mindestens einen antriebsseitigen Trommel und/oder das abtriebsseitige Seilende kann an der mindestens einen abtriebsseitigen Trommel stoffschlüssig befestigt sein.

Vorzugsweise weist die mindestens eine antriebsseitige Trommel und/oder die mindestens eine abtriebsseitige Trommel eine in Umfangsrichtung verlaufende Rille zur Aufnahme des mindestens einen Seils auf. Die Rille kann damit die Schnittstelle der mindestens einen antriebsseitigen Trommel und/oder der mindestens einen abtriebsseitigen Trommel zu dem mindestens einen Seil bilden. Mithilfe der Rille kann das mindestens eine Seil auf einem definierten Umfang der mindestens einen antriebsseitigen Trommel und/oder der mindestens einen abtriebsseitigen Trommel aufgenommen werden. Damit kann eine zuverlässige Übertragung von Drehzahl und Drehmoment sichergestellt werden. Die Rille weist im Querschnitt bevorzugt eine bogenförmige Kontur auf. Die Rille kann somit eine Öffnung aufweisen. Besonders bevorzugt weist die bogenförmige Kontur einen konstanten Radius auf, sodass die Kontur kreisbogenförmig ausgebildet ist. Dadurch kann die Rille besonders gut an die Kontur des mindestens einen Seils angepasst sein. Dadurch, dass die Rille zur Aufnahme des mindestens einen Seils dient, wird das Übersetzungsverhältnis der Getriebeanordnung vorzugsweise durch das Durchmesserverhältnis von der mindestens einen abtriebsseitigen Trommel zu der mindestens einen antriebsseitigen Trommel bestimmt.

In einer Weiterbildung der Erfindung ist die Rille an mindestens einer der mindestens einen antriebsseitigen Trommel und/oder der mindestens einen abtriebsseitigen Trommel helixförmig ausgebildet. Dadurch kann ein maximaler Drehwinkel der die helixförmige Rille aufweisenden Trommel von mehr als 360° erreicht werden. Vorzugsweise ist die Öffnung der Rille dabei rechtwinklig zu der Drehachse der entsprechenden Trommel angeordnet, sodass das mindestens eine Seil rechtwinklig zur Drehachse der entsprechenden Trommel in die Rille eingelegt und aus der Rille entnommen werden kann. Bei einer Anordnung der helixförmigen Rille an der antriebsseitigen Trommel ist die Öffnung der Rille demnach vorzugsweise senkrecht zur Antriebsachse ausgerichtet.

Erfindungsgemäß ist die mindestens eine antriebsseitige Trommel in Abhängigkeit von einem antriebsseitigen Drehwinkel und/oder die mindestens eine abtriebsseitige Trommel in Abhängigkeit von einem abtriebsseitigen Drehwinkel axial verschiebbar angeordnet. Als antriebsseitiger Drehwinkel wird dabei vorzugsweise der Drehwinkel der der antriebsseitigen Trommel bezeichnet. Dementsprechend kann der Drehwinkel der abtriebsseitigen Trommel als abtriebsseitiger Drehwinkel bezeichnet werden. Durch eine derartige Abhängigkeit kann, insbesondere bei einer helixförmigen Rille, ein Übergang des mindestens einen Seils von der mindestens einen antriebsseitigen Trommel auf die mindestens eine abtriebsseitige Trommel und umgekehrt unter Aufrechterhaltung des zuvor beschriebenen Kontaktumfangs erfolgen. Die axiale Verschiebbarkeit der mindestens einen antriebsseitigen Trommel ist vorzugsweise derart ausgebildet, dass eine Verschiebbarkeit entlang der Antriebsachse gegeben ist. Die axiale Verschiebbarkeit der mindestens einen abtriebsseitigen Trommel ist vorzugsweise derart ausgebildet, dass eine Verschiebbarkeit entlang der Abtriebsachse gegeben ist. Die axiale Verschiebbarkeit der mindestens einen antriebsseitigen Trommel und/oder der mindestens einen abtriebsseitigen Trommel kann beispielsweise mittels einer Schraubenführung realisiert werden.

Zur weiteren Sicherstellung eines einwandfreien Übergangs mindestens einen Seils von der mindestens einen antriebsseitigen Trommel auf die mindestens eine abtriebsseitige Trommel und umgekehrt, kann an der mindestens einen abtriebsseitigen Trommel und/oder an der mindestens einen antriebsseitigen Trommel ein rollenförmiger Niederhalter angeordnet sein, der das mindestens eine Seil in der mindestens abtriebsseitigen Trommel und/oder der an der mindestens einen antriebsseitigen Trommel positionieren kann.

An dem Antriebskörper und/oder an dem Abtriebskörper kann eine Spannvorrichtung zum Spannen des mindestens einen Seils angeordnet sein. Dadurch kann eine Vorspannung des mindestens einen Seils und damit insbesondere die Steifigkeit und das Spiel der Getriebeanordnung eingestellt werden. Vorzugsweise ist die Spannvorrichtung in der Rille angeordnet. Besonders bevorzugt ist die Spannvorrichtung an der mindestens einen abtriebsseitigen Trommel angeordnet. Die Spannvorrichtung kann zum Spannen des mindestens einen Seils eine Spannschraube aufweisen. Alternativ kann Spannvorrichtung in das mindestens eine Seil integriert sein.

In einer Weiterbildung der Erfindung weist die Getriebeanordnung einen Umlenkkörper mit mindestens einer um eine Umlenkachse drehbaren umlenkenden Trommel auf. Der Umlenkkörper ist vorzugsweise derart angeordnet, dass das mindestens eine Seil mit einem Kontaktumfang gleichzeitig an der mindestens einen umlenkenden Trommel und der mindestens einen antriebsseitigen Trommel oder der mindestens einen umlenkenden Trommel und der mindestens einen abtriebsseitigen Trommel anliegt. Ein derartiger Umlenkkörper kann die Möglichkeiten, wie der Antriebskörper und der Abtriebskörper im Raum zueinander angeordnet werden können, vervielfachen. Insbesondere kann der Umlenkkörper eine voneinander räumlich entfernte Anordnung des Antriebskörpers und des Abtriebskörpers ermöglichen. Außerdem kann der Umlenkkörper eine zusätzliche Übersetzungsstufe darstellen und so eine Erhöhung des Übersetzungsverhältnisses der Getriebeanordnung ermöglichen. Sofern die Antriebsachse und die Abtriebsachse einen winkligen Versatz zueinander aufweisen, kann die entsprechende Umlenkung des Seils mittels des Umlenkkörpers erfolgen. Die Umlenkachse mit der zu der Antriebsachse und/oder der Abtriebsachse einen Umlenkwinkel einschließen.

In einer bevorzugten Ausführungsform der Erfindung weist der Antriebskörper eine erste antriebsseitige Trommel und eine zweite antriebsseitige Trommel auf, die jeweils der mindestens einen antriebsseitigen Trommel entsprechen, und der Abtriebskörper weist eine erste abtriebsseitige Trommel und eine zweite abtriebsseitige Trommel auf, die jeweils der mindestens einen abtriebsseitigen Trommel entsprechen. Demnach können die erste antriebsseitige Trommel und die zweite antriebsseitige Trommel jeweils drehbar um die Antriebsachse angeordnet sein, und die erste abtriebsseitige Trommel und die zweite abtriebsseitige Trommel können jeweils drehbar um die Abtriebsachse angeordnet sein.

Außerdem weist die Getriebeanordnung in dieser Ausführungsform ein dem mindestens einen Seil entsprechendes erstes Seil sowie ein dem mindestens einen Seil entsprechendes zweites Seil auf, wobei das erste Seil mit den ersten Trommeln und das zweite Seil mit den zweiten Trommeln in Wirkverbindung steht. Vorzugsweise ist demnach das erste Seil auf der ersten antriebsseitigen Trommel sowie auf der ersten abtriebsseitigen Trommel aufwickelbar und weist ein erstes antriebsseitiges Seilende sowie ein erstes abtriebsseitiges Seilende auf, wobei das erste antriebsseitige Seilende an der ersten antriebsseitigen Trommel und das erste abtriebsseitige Seilende an der ersten abtriebsseitigen Trommel angeordnet sein kann. Dementsprechend kann das zweite Seil auf der zweiten antriebsseitigen Trommel sowie auf der zweiten abtriebsseitigen Trommel aufwickelbar sein und ein zweites antriebsseitiges Seilende sowie ein zweites abtriebsseitiges Seilende aufweisen, wobei das zweite antriebsseitige Seilende an der zweiten antriebsseitigen Trommel und das zweite abtriebsseitige Seilende an der zweiten abtriebsseitigen Trommel angeordnet sein kann.

Dadurch, dass
- die erste antriebsseitige Trommel und die zweite antriebsseitige Trommel jeweils der mindestens einen zuvor beschriebenen antriebsseitigen Trommel,
- die erste abtriebsseitige Trommel und die zweite abtriebsseitige Trommel jeweils der mindestens einen zuvor beschriebenen abtriebsseitigen Trommel,
   und
- das erste Seil und das zweite Seil jeweils dem mindestens einen zuvor beschriebenen Seil
entsprechen, und dabei das erste Seil mit den ersten Trommeln und das zweite Seil mit den zweiten Trommeln in Wirkverbindung steht, kann die Getriebeanordnung insbesondere die nachfolgend beschriebenen Merkmale aufweisen.

Das erste Seil kann mit einem ersten Kontaktumfang gleichzeitig an der ersten antriebsseitigen Trommel und der ersten abtriebsseitigen Trommel anliegen. Das zweite Seil kann mit einem zweiten Kontaktumfang gleichzeitig an der zweiten antriebsseitigen Trommel und der zweiten abtriebsseitigen Trommel anliegen. Die Getriebeanordnung kann dementsprechend auch einen ersten Kontaktbereich und einen zweiten Kontaktbereich aufweisen.

Vorzugsweise ist das erste antriebsseitige Seilende an der ersten antriebsseitigen Trommel und/oder das erste abtriebsseitige Seilende an der ersten abtriebsseitigen Trommel formschlüssig, reibschlüssig und/oder stoffschlüssig befestigt. Entsprechend ist vorzugsweise das zweite antriebsseitige Seilende an der zweiten antriebsseitigen Trommel und/oder das zweite abtriebsseitige Seilende an der zweiten abtriebsseitigen Trommel formschlüssig, reibschlüssig und/oder stoffschlüssig befestigt.

Die erste antriebsseitige Trommel und/oder die erste abtriebsseitige Trommel können jeweils eine in Umfangsrichtung verlaufende Rille zur Aufnahme des ersten Seils aufweisen. Die zweite antriebsseitige Trommel und/oder die zweite abtriebsseitige Trommel können jeweils eine in Umfangsrichtung verlaufende Rille zur Aufnahme des zweiten Seils aufweisen. Eine oder mehrere der Rillen können helixförmig ausgebildet sein.

Die erste antriebsseitige Trommel und/oder die zweite antriebsseitige Trommel können in Abhängigkeit von einem antriebsseitigen Drehwinkel axial verschiebbar angeordnet sein. Die erste abtriebsseitige Trommel und/oder die zweite abtriebsseitige Trommel können in Abhängigkeit von einem abtriebsseitigen Drehwinkel axial verschiebbar angeordnet sein.

Besonders bevorzugt ist die Spannvorrichtung an der mindestens einen abtriebsseitigen Trommel angeordnet.

Die erste antriebsseitige Trommel kann eine erste antriebsseitige Spannvorrichtung aufweisen und die zweite antriebsseitige Trommel kann eine zweite antriebsseitige Spannvorrichtung aufweisen. Vorzugsweise ist an der ersten abtriebsseitigen Trommel eine erste abtriebsseitige Spannvorrichtung und an der zweiten abtriebsseitigen Trommel eine zweite abtriebsseitige Spannvorrichtung angeordnet.

Der Umlenkkörper kann eine erste umlenkende Trommel und eine zweite umlenkende Trommel aufweisen. Die erste umlenkende Trommel kann dabei so angeordnet sein, dass das erste Seil mit einem ersten Kontaktumfang gleichzeitig an der ersten umlenkenden Trommel und der ersten antriebsseitigen Trommel oder der ersten umlenkenden Trommel und der ersten abtriebsseitigen Trommel anliegt. In entsprechender Weise kann die zweite umlenkende Trommel so angeordnet sein, dass das zweite Seil mit einem zweiten Kontaktumfang gleichzeitig an der zweiten umlenkenden Trommel und der zweiten antriebsseitigen Trommel oder der zweiten umlenkenden Trommel und der zweiten abtriebsseitigen Trommel anliegt.

Darüber hinaus kann die Erfindung derart ausgebildet sein, dass zumindest eine der zweiten Trommeln gegenüber der entsprechenden ersten Trommel axial versetzt angeordnet ist und/oder zumindest eine der zweiten Trommeln einen anderen, vorzugsweise einen kleineren Durchmesser als die entsprechende erste Trommel aufweist. Der axiale Versatz bezieht sich dabei vorzugsweise auf die entsprechende Drehachse. So kann beispielsweise die zweite antriebsseitige Trommel gegenüber der ersten antriebsseitigen Trommel bezüglich der Antriebsachse axial versetzt angeordnet sein. Entsprechendes kann für die abtriebsseitigen Trommeln bezüglich der Abtriebsachse und/oder die umlenkenden Trommeln bezüglich der Umlenkachse gelten. Durch eine derartige Anordnung kann, insbesondere bei einem winkligen Versatz der entsprechenden Drehachsen, eine kontaktfreie Überkreuzung des ersten Seils und des zweiten Seils erreicht werden. Eine Reibung des ersten Seils und des zweiten Seils aneinander kann damit vermieden werden. Insbesondere bei einem winkligen Versatz der beteiligten Drehachsen ist die Öffnung der an der jeweiligen Trommel angeordneten Rille dabei gegenüber der entsprechenden Drehachse vorzugsweise geneigt. Beträgt der winklige Versatz der Abtriebsachse gegenüber der Antriebsachse beispielsweise 90°, können die Öffnungen der Rillen der ersten antriebsseitigen Trommel und der zweiten antriebsseitigen Trommel gegenüber der Antriebsachse jeweils geneigt sein, vorzugsweise um 45°. Entsprechendes kann in diesem Fall für die Öffnungen der Rillen der abtriebsseitigen Trommeln bezüglich der Abtriebsachse gelten. Sofern sich die Durchmesser der beteiligten zweiten Trommeln von denen der beteiligten zweiten Trommeln unterscheiden, sind die Durchmesserverhältnisse der beteiligten ersten Trommeln und der beteiligten zweiten Trommeln vorzugsweise konstant. Dadurch können die beteiligten ersten Trommeln und die beteiligten zweiten Trommeln gleich Übersetzungsverhältnisse aufweisen. Ein Verlegen der Getriebeanordnung kann damit vermieden werden.

Vorzugsweise sind das erste Seil und das zweite Seil bezüglich der Antriebsachse gegensinnig an dem Antriebskörper und/oder bezüglich der Abtriebsachse gegensinnig an dem Abtriebskörper angeordnet. Mittels des ersten Seils und des zweiten Seil können damit einander entgegengesetzte Drehzahlen und Drehmomente übertragen werden. Auf ein Federelement zur Rückstellung kann damit verzichtet werden.

Die antriebsseitigen Trommeln und/oder die abtriebsseitigen Trommeln können gegeneinander verdrehbar angeordnet sein. Dazu können die beiden antriebsseitigen Trommeln und/oder die beiden abtriebsseitigen Trommeln jeweils mittels einer Einstellschraube miteinander verbunden sein. Dadurch können das erste Seil und das zweite Seil gegeneinander vorgespannt werden. Die Verdrehbarkeit der antriebsseitigen Trommeln und/oder der abtriebsseitigen Trommeln gegeneinander können damit eine Alternative zu der zuvor beschriebenen Spannvorrichtung darstellen. Die Verdrehung der antriebsseitigen Trommeln erfolgt vorzugsweise um die Antriebsachse. Die Verdrehung der abtriebsseitigen Trommeln erfolgt vorzugsweise um die Abtriebsachse. Besonders bevorzugt sind die antriebsseitigen Trommeln und/oder die abtriebsseitigen Trommeln auch jeweils gegeneinander arretierbar angeordnet.

In einer Weiterbildung der Erfindung sind die erste antriebsseitige Trommel und die zweite antriebsseitige Trommel bezüglich der Abtriebsachse zueinander um 180° versetzt angeordnet und/oder die erste abtriebsseitige Trommel und die zweite abtriebsseitige Trommel sind bezüglich der Antriebsachse zueinander um 180° versetzt angeordnet. Dadurch kann insbesondere der von der Getriebeanordnung beanspruchte Bauraum angepasst werden. Durch eine derartige Anordnung der antriebsseitigen Trommeln, kann ein Versatz einer ersten Übergabestelle, an der das erste Seil von der ersten antriebsseitigen Trommel an die erste abtriebsseitige Trommel übergeben wird, zu einer zweiten Übergabestelle, an der das zweite Seil von der zweiten antriebsseitigen Trommel an die zweite abtriebsseitige Trommel übergeben wird, bezüglich der Abtriebsachse von 180° realisiert werden. In entsprechender Weise kann durch eine derartige Anordnung der abtriebsseitigen Trommeln ein Versatz der ersten Übergabestelle zu der zweiten Übergabestelle bezüglich der Antriebsachse von 180° realisiert werden. Eine derart versetzte Anordnung der antriebsseitigen Trommeln kommt vorzugsweise bei einer helixförmigen Ausbildung der an den antriebsseitigen Trommeln angeordneten Rillen zur Anwendung. Eine derart versetzte Anordnung der abtriebsseitigen Trommeln kommt vorzugsweise bei einer helixförmigen Ausbildung der an den abtriebsseitigen Trommeln angeordneten Rillen zur Anwendung. Insbesondere bei einem winkligen Versatz von Antriebsachse und Abtriebsachse von 90° kann mit einer derart versetzten Anordnung der antriebsseitigen Trommeln oder der abtriebsseitigen Trommeln ein Bauraumvorteil erreicht werden. Die um 180° versetzen Trommeln sind vorzugsweise an einer gemeinsamen Welle angeordnet, die bei einem winkligen Versatz von Antriebsachse und Abtriebsachse von 90° die Antriebsachse oder die Abtriebsachse schneidet.

Sofern die Getriebeanordnung einen Umlenkkörper umfasst, können in entsprechender Weise die erste antriebsseitige Trommel und die zweite antriebsseitige Trommel bezüglich der Umlenkachse und/oder die erste abtriebsseitige Trommel und die zweite abtriebsseitige Trommel bezüglich der Umlenkachse zueinander um 180° versetzt angeordnet sein, insbesondere dann, wenn die Antriebsachse und die Umlenkachse und/oder die Abtriebsachse und die Umlenkachse um 90° versetzt zueinander angeordnet sind.

In einer weiteren Ausführungsform der Erfindung ist der Antriebskörper bezüglich der Antriebsachse zwischen der ersten abtriebsseitigen Trommel und der zweiten abtriebsseitigen Trommel angeordnet und/oder der Abtriebskörper ist bezüglich der Abtriebsachse zwischen der ersten antriebsseitigen Trommel und der zweiten antriebsseitigen Trommel angeordnet. Durch eine derartige Anordnung können ebenfalls Bauraumvorteile erreicht werden. Zur Anwendung kommt diese Anordnung vorzugsweise dann, wenn die an den antriebsseitigen Trommeln und/oder den abtriebsseitigen Trommeln angeordneten Rillen helixförmig ausgebildet sind und/oder die Antriebsachse und die Abtriebsachse einen winkligen Versatz, insbesondere von 90°, zueinander aufweisen. Die Trommeln des Antriebskörpers können dabei bezüglich der Antriebsachse an entgegengesetzten Seiten des Antriebskörpers angeordnet sein. Entsprechend können die Trommeln des Abtriebskörpers dabei bezüglich der Abtriebsachse an entgegengesetzten Seiten des Abtriebskörpers angeordnet sein.

In entsprechender Weise kann der Umlenkkörper bezüglich der Umlenkachse zwischen der ersten abtriebsseitigen Trommel und der zweiten abtriebsseitigen Trommel angeordnet und/oder zwischen der ersten antriebsseitigen Trommel und der zweiten antriebsseitigen Trommel angeordnet sein.

Ein erfindungsgemäßer Roboter umfasst eine Getriebeanordnung mit den zuvor beschriebenen Merkmalen. Der Roboter kann eine Basis und einen Roboterarm mit einem ersten Armabschnitt und einem zweiten Armabschnitt umfassen, wobei der zweite Armabschnitt vorzugsweise um eine erste Knickachse drehbar an dem ersten Armabschnitt angeordnet ist. Der erste Armabschnitt kann an der Basis angeordnet sein. Mittels der Basis kann der Roboterarm gegenüber der Umwelt gelagert sein. In dem ersten Armabschnitt kann der Antriebskörper angeordnet sein. Vorzugsweise ist in dem ersten Armabschnitt ferner eine Antriebseinheit zum Antrieb des Antriebskörpers angeordnet. In dem zweiten Armabschnitt kann der Abtriebskörper derart angeordnet sein, dass die Abtriebsachse auf der ersten Knickachse liegt. Zur Übertragung der Drehzahl und des Drehmoments von der Antriebseinheit auf den Abtriebskörper kann der Abtriebskörper derart angeordnet sein, dass das erste Seil und das zweite Seil mit dem ersten Kontaktumfang und dem zweiten Kontaktumfang gleichzeitig an den entsprechenden antriebsseitigen Trommeln und den entsprechenden abtriebsseitigen Trommeln anliegen. Die Antriebsachse und die Abtriebsachse können dabei einen Versatz von 90° zueinander aufweisen. Durch eine derartige Anordnung kann die relativ schwere Antriebseinheit in dem basisnahen ersten Armabschnitt angeordnet werden, und der zweite Armabschnitt ein relativ geringes Gewicht aufweisen. So kann die Dynamik des Roboters erhöht werden. Darüber hinaus kann der von dem Roboterarm beanspruchte Bauraum deutlich reduziert werden.

In einer Weiterbildung weist der Roboter einen dritten Armabschnitt auf, der um eine zweite Knickachse drehbar an dem zweiten Armabschnitt angeordnet ist. Eine zweite Antriebseinheit kann in dem zweiten Armabschnitt vorzugsweise nahe der ersten Knickachse angeordnet sein. Der Roboter kann eine zweite Getriebeanordnung mit den zuvor beschriebenen Merkmalen aufweisen, die einen Umlenkkörper umfasst. Der Antriebskörper der zweiten Getriebeanordnung ist vorzugsweise in dem zweiten Armabschnitt an der zweiten Antriebseinheit angeordnet. Der Abtriebskörper der zweiten Getriebeanordnung kann derart an dem dritten Armabschnitt angeordnet sein, dass die Abtriebsachse der zweiten Getriebeanordnung auf der zweiten Knickachse liegt. Zur Übertragung der Drehzahl und des Drehmoments von der zweiten Antriebseinheit auf den Abtriebskörper der zweiten Getriebeanordnung kann der Umlenkkörper derart angeordnet sein, dass das erste Seil und das zweite Seil der zweiten Getriebeanordnung mit dem Kontaktumfang gleichzeitig an den umlenkenden Trommeln und den antriebsseitigen Trommeln anliegen der zweiten Getriebeanordnung. Der Umlenkkörper kann ferner derart angeordnet sein, dass die Umlenkachse auf der ersten Knickachse liegt. Die Antriebsachse der zweiten Getriebeanordnung und die Umlenkachse der zweiten Getriebeanordnung können dabei einen Versatz von 90° zueinander aufweisen. Damit kann bei gleichzeitiger Bauraumreduktion die Dynamik des Roboters weiter erhöht werden. Dadurch dass die zweite Getriebeanordnung den Umlenkkörper aufweist, kann sie die Länge des zweiten Armabschnitts zwischen dem Antriebskörper der zweiten Getriebeanordnung und dem zugehörigen Abtriebskörper überbrücken.

Ausführungsbeispiele der Erfindung werden anhand der nachfolgenden Figuren erläutert. Es zeigt:
- Figur 1a: einen Ausschnitt eines Roboterarms mit einer Getriebeanordnung nach dem Stand der Technik,
- Figur 1b: einen Ausschnitt eines Roboterarms mit einem ersten Ausführungsbeispiel einer erfindungsgemäßen Getriebeanordnung,
- Figur 2: eine perspektivische Darstellung des ersten Ausführungsbeispiels einer erfindungsgemäßen Getriebeanordnung,
- Figur 3: eine Explosionsdarstellung des in Fig. 2 gezeigten Ausführungsbeispiels,
- Figur 4: eine Schnittansicht des in Fig. 2 gezeigten Ausführungsbeispiels,
- Figur 5: einen Ausschnitt aus einer Rückansicht des in Fig. 2 gezeigten Ausführungsbeispiels mit einer Einstellschraube,
- Figur 6: einen Ausschnitt aus einem zweiten Ausführungsbeispiel einer erfindungsgemäßen Getriebeanordnung mit einer Spannvorrichtung,
- Figur 7: eine perspektivische Ansicht eines dritten Ausführungsbeispiels einer erfindungsgemäßen Getriebeanordnung,
- Figur 8: eine perspektivische Ansicht eines vierten Ausführungsbeispiels einer erfindungsgemäßen Getriebeanordnung,
- Figur 9: eine perspektivische Ansicht eines fünften Ausführungsbeispiels einer erfindungsgemäßen Getriebeanordnung,
- Figur 10: eine Schnittansicht des in Fig. 9 gezeigten Ausführungsbeispiels,
- Figur 11: eine perspektivische Ansicht eines sechsten Ausführungsbeispiels einer erfindungsgemäßen Getriebeanordnung,
- Figur 12: eine Schnittansicht des in Fig. 11 gezeigten Ausführungsbeispiels,
- Figur 13: eine Schnittansicht eines Ausführungsbespiels eines erfindungsgemäßen Roboters.

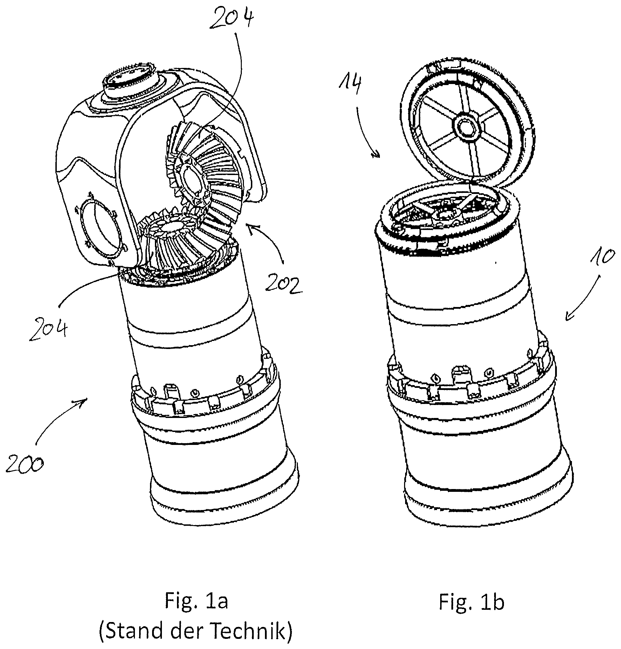

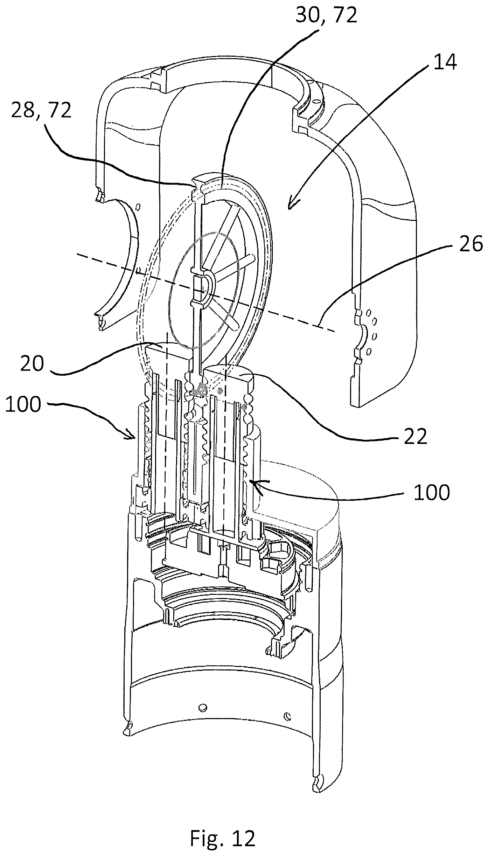

Die Figuren 1b bis 13 zeigen verschiedene Ansichten verschiedener Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Fig. 1a zeigt einen Ausschnitt eines Roboterarms 200 mit einer Getriebeanordnung 202 nach dem Stand der Technik. Die Getriebeanordnung umfasst Kegelzahnräder 204 und weist daher ein relativ hohes Gewicht auf und ist außerdem spielbehaftet.

Fig. 1b stellt dem in Fig. 1a gezeigten Ausschnitt des Roboterarms 200 des Stands der Technik einen Ausschnitt eines Roboterarms 10 eines erfindungsgemäßen Roboters 12 mit einem ersten Ausführungsbeispiel einer erfindungsgemäßen Getriebeanordnung 14 gegenüber. Die Getriebeanordnung 14 ist relativ leicht und außerdem spielfrei.

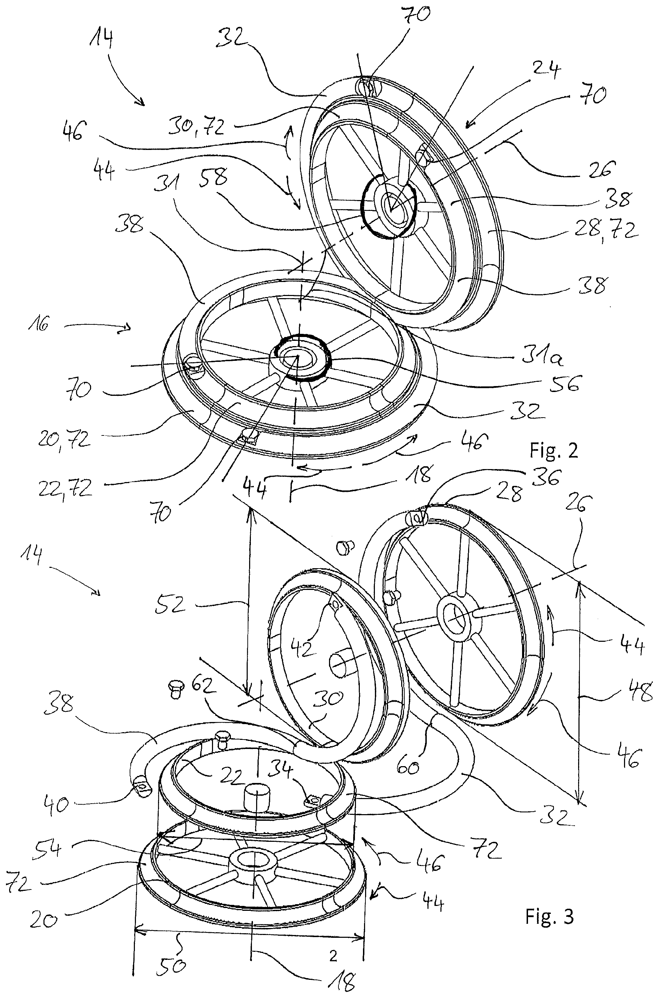

Das erste Ausführungsbeispiel der Getriebeanordnung 14 ist detailliert in den Fig. 2 bis 5 dargestellt. Die Getriebeanordnung 14 umfasst einen Antriebskörper 16 und eine Antriebsachse 18. Der Antriebskörper 16 kann eine um die Antriebsachse 18 drehbar angeordnete erste antriebsseitige Trommel 20 sowie eine um die Antriebsachse 18 drehbar angeordnete zweite antriebsseitige Trommel 22 aufweisen. Außerdem umfasst die Getriebeanordnung einen Abtriebskörper 24 und eine Abtriebsachse 26. Der Abtriebskörper 24 kann eine um die Abtriebsachse 26 drehbar angeordnete erste abtriebsseitige Trommel 28 sowie eine um die Abtriebsachse 26 drehbar angeordnete zweite abtriebsseitige Trommel 30 aufweisen. Vorzugsweise schneiden sich die Antriebsachse 18 und die Abtriebsachse 26 in einem gemeinsamen Achsenschnittpunkt 31. Besonders bevorzugt beträgt ein winkliger Achsenversatz 31a zwischen der Antriebsachse und der Abtriebsachse 90°.

Darüber hinaus kann die Getriebeanordnung 14 ein erstes Seil 32 umfassen, das auf der ersten antriebsseitigen Trommel 20 sowie auf der ersten abtriebsseitigen Trommel 28 aufwickelbar ist, und ein erstes antriebsseitiges Seilende 34 sowie ein erstes abtriebsseitiges Seilende 36 aufweist. Vorzugsweise ist das erste antriebsseitige Seilende 34 an der ersten antriebsseitigen Trommel 20 und das erste abtriebsseitige Seilende 36 an der ersten abtriebsseitigen Trommel 28 angeordnet. Ferner kann die Getriebeanordnung 14 ein zweites Seil 38 umfassen, das auf der zweiten antriebsseitigen Trommel 22 sowie auf der zweiten abtriebsseitigen Trommel 30 aufwickelbar ist, und ein zweites antriebsseitiges Seilende 40 sowie ein zweites abtriebsseitiges Seilende 42 aufweist. Vorzugsweise ist das zweite antriebsseitige Seilende 40 an der zweiten antriebsseitigen Trommel 22 und das zweite abtriebsseitige Seilende 42 an der zweiten abtriebsseitigen Trommel 30 angeordnet.

Vorzugsweise sind das erste Seil 32 und das zweite Seil 38 bezüglich der Antriebsachse 18 gegensinnig an dem Antriebskörper 16 und bezüglich der Abtriebsachse 26 gegensinnig an dem Abtriebskörper 24 angeordnet. Mittels des ersten Seils 32 und des zweiten Seils 38 können damit einander entgegengesetzte Drehzahlen und Drehmomente übertragen werden.

Durch Drehen der der antriebsseitigen Trommeln 20, 22 um die Antriebsachse 18 in einer ersten Drehrichtung 44 kann somit die Drehzahl und das Drehmoment über das erste Seil 32 auf die erste abtriebsseitige Trommel 28 und damit auf den Abtriebskörper 24 übertragen werden. In entsprechender Weise kann durch Drehen der der antriebsseitigen Trommeln 20, 22 um die Antriebsachse 18 in einer zweiten Drehrichtung 46 die Drehzahl und das Drehmoment über das zweite Seil 38 auf die zweite abtriebsseitige Trommel 30 und damit auf den Abtriebskörper 24 übertragen werden. Die Drehwinkel der antriebsseitigen Trommeln 20, 22 und der abtriebsseitigen Trommeln 28, 30 können dabei insbesondere durch die Länge der Seile 32, 38 begrenzt sein.

Ein Übersetzungsverhältnis der Getriebeanordnung 14 kann durch den Quotienten aus einem ersten abtriebsseitigen Trommeldurchmesser 48 der ersten abtriebsseitigen Trommel 28 und einem ersten antriebsseitigen Trommeldurchmesser 50 der ersten antriebsseitigen Trommel 20 gebildet werden. Der entsprechende Quotient aus einem zweiten abtriebsseitigen Trommeldurchmesser 52 der zweiten abtriebsseitigen Trommel 30 und einem zweiten antriebsseitigen Trommeldurchmesser 54 der zweiten antriebsseitigen Trommel 22 ist vorzugsweise gleich groß. Das in den Fig. 2 bis 5 dargestellte Ausführungsbeispiel weist eine Übersetzung von 1 auf. Ein maximaler antriebsseitiger Drehwinkel 56 und ein maximaler abtriebsseitiger Drehwinkel 58 sind damit gleich groß und werden im in Fig. 2 gezeigten Ausführungsbeispiel durch die Länge der Seile 32, 38 auf kleiner als 360° definiert.

Vorzugsweise ist der Antriebskörper 16 zusammen mit den antriebsseitigen Trommeln 20, 22 um die Antriebsachse 18 drehbar. Dementsprechend kann auch der Abtriebskörper 24 zusammen mit den abtriebsseitigen Trommeln 28, 30 um die Abtriebsachse 26 drehbar sein. Der Antriebskörper 16 und der Abtriebskörper 24 können als Rad ausgebildet sein.

Vorzugsweise liegt das erste Seil 32 mit einem in Fig. 3 u. 4 gekennzeichneten ersten Kontaktumfang 60 gleichzeitig an der ersten antriebsseitigen Trommel 20 und der ersten abtriebsseitigen Trommel 28 an. Dementsprechend kann das zweite Seil 38 mit einem zweiten Kontaktumfang 62 gleichzeitig an der zweiten antriebsseitigen Trommel 22 und der zweiten abtriebsseitigen Trommel 30 anliegen.

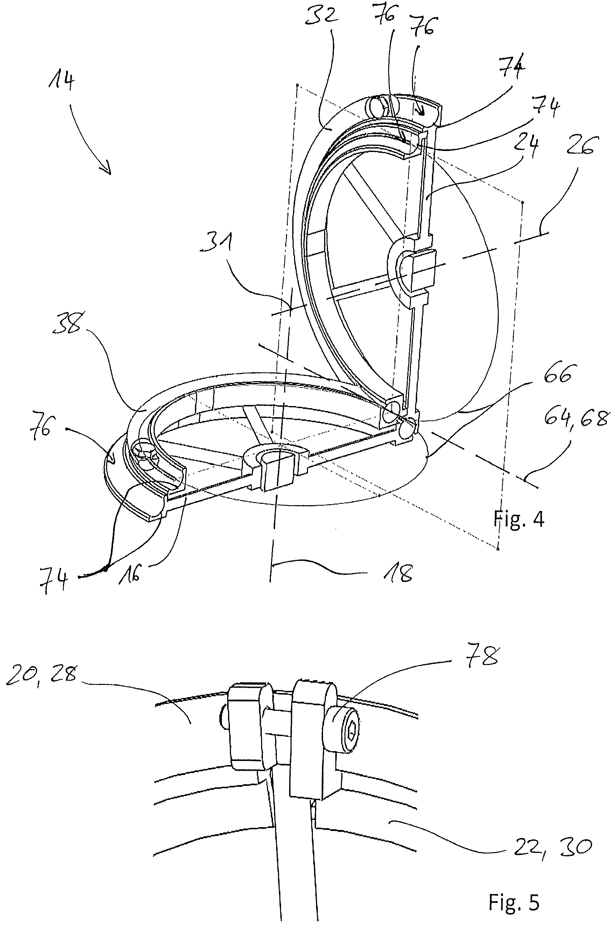

Der jeweilige Kontaktumfang 60, 62 kann den Wendepunkt des an der entsprechenden antriebsseitigen Trommel 20, 22 und der entsprechenden abtriebsseitigen Trommel 28, 30 anliegenden entsprechenden Seils 32, 38 markieren. Wie in Fig. 4 am Beispiel der zweiten Trommeln 22, 30 dargestellt ist, kann eine gedachte antriebsseitige Tangente 64 der zweiten antriebsseitigen Trommel 22, die auf einer Seilmittellinie 66 des zweiten Seils 38 angeordnet ist, und eine gedachte abtriebsseitige Tangente 68 der zweiten abtriebsseitigen Trommel 30, die auf der Seilmittellinie 66 angeordnet ist, an der Position des zweiten Kontaktumfangs 62 deckungsgleich sein. Der Zusammenhang gilt für den ersten Kontaktumfang 60 entsprechend.

Wie insbesondere aus Fig. 3 deutlich wird, sind die antriebsseitigen Seilenden 34, 40 an den antriebsseitigen Trommeln 20, 22 und die abtriebsseitigen Seilenden 36, 42 an den abtriebsseitigen Trommeln 28, 30 jeweils mittels einer Schraubverbindung 70 form- und reibschlüssig befestigt.

Wie insbesondere aus der Darstellung in Fig. 4 erkennbar ist, können die erste antriebsseitige Trommel 20 und die erste abtriebsseitige Trommel 28 sowie die zweite antriebsseitige Trommel 22 und die zweite abtriebsseitige Trommel 30 können jeweils eine in Umfangsrichtung verlaufende Rille 72 zur Aufnahme des ersten Seils 32 bzw. des zweiten Seils 38 aufweisen. Die Rille 72 kann damit die Schnittstelle der ersten antriebsseitigen Trommel 20 oder der ersten abtriebsseitigen Trommel 28 zu dem ersten Seil 32 sowie die die Schnittstelle der zweiten antriebsseitigen Trommel 22 oder der zweiten abtriebsseitigen Trommel 30 zu dem zweiten Seil 38 bilden. Mithilfe der Rille 72 können das erste Seil 32 und das zweite Seil 38 auf einem definierten Umfang der entsprechenden antriebsseitigen Trommeln 20, 22 und der entsprechenden abtriebsseitigen Trommeln 28, 30 aufgenommen werden. Wie in Fig. 4 dargestellt ist, weist die Rille 72 vorzugsweise eine bogenförmige Kontur 74 mit einem konstanten Radius auf, sodass die Kontur 74 kreisbogenförmig ausgebildet ist.

Wie insbesondere in den Fig. 2 u. 4 erkennbar ist, kann die Getriebeanordnung 14 derart ausgebildet sein, dass die zweite antriebsseitige Trommel 22 und die zweite abtriebsseitige Trommel 30 jeweils gegenüber der entsprechenden ersten Trommel 20, 28 axial versetzt angeordnet sind und jeweils einen anderen, vorzugsweise einen kleineren, Durchmesser als die entsprechende erste Trommel 20, 28 aufweist. Der axiale Versatz der zweiten antriebsseitigen Trommel 22 und der ersten antriebsseitigen Trommel 20 bezieht sich dabei vorzugsweise auf die entsprechende Drehachse, nämlich die Antriebsachse 18. Der axiale Versatz der zweiten abtriebsseitigen Trommel 30 und der ersten abtriebsseitigen Trommel 28 bezieht sich dementsprechend vorzugsweise auf die Abtriebsachse 26. Durch eine derartige Anordnung kann, insbesondere bei einem winkligen Achsenversatz 31a, eine kontaktfreie Überkreuzung des ersten Seils 32 und des zweiten Seils 38 erreicht werden.

Beträgt der winklige Achsversatz 31a 90°, können Öffnungen 76 der Rillen 72 der ersten antriebsseitigen Trommel 20 und der zweiten antriebsseitigen Trommel 22 gegenüber der Antriebsachse 18 jeweils geneigt sein, vorzugsweise um 45°. Entsprechendes kann in diesem Fall für die Öffnungen 76 der Rillen 72 der abtriebsseitigen Trommeln 28, 30 bezüglich der Abtriebsachse 26 gelten.

Die antriebsseitigen Trommeln 20, 22 und/oder die abtriebsseitigen Trommeln 28, 30 können jeweils gegeneinander verdrehbar angeordnet sein. Dazu können die beiden antriebsseitigen Trommeln 20, 22 und/oder die beiden abtriebsseitigen Trommeln 28, 30 jeweils mittels einer in Fig. 5 gezeigten Einstellschraube 78 miteinander verbunden sein. Die Einstellschraube 78 ist vorzugsweise auf der Rückseite des Antriebskörpers 16 und/oder Abtriebskörpers 24 angeordnet. Dadurch können das erste Seil 32 und das zweite Seil 38 gegeneinander vorgespannt werden. Die Verdrehung der antriebsseitigen Trommeln 20, 22 erfolgt vorzugsweise um die Antriebsachse 18. Die Verdrehung der abtriebsseitigen Trommeln 28, 30 erfolgt vorzugsweise um die Abtriebsachse 26. Besonders bevorzugt sind die antriebsseitigen Trommeln 20, 22 und/oder die abtriebsseitigen Trommeln 28, 30, auch jeweils gegeneinander arretierbar angeordnet. Die Arretierung kann ebenfalls mittels der Einstellschraube 78 erfolgen.

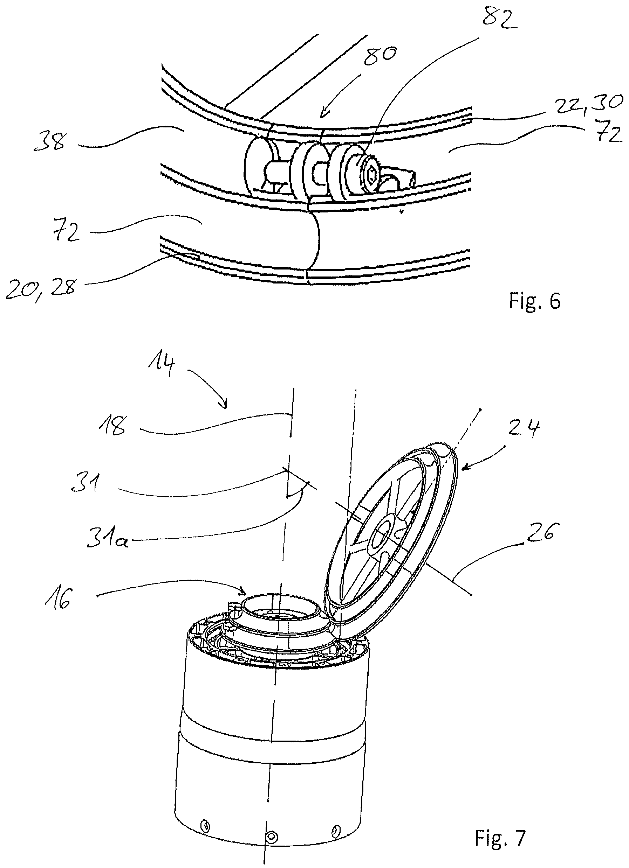

Bezüglich der weiteren, in Fig. 6 bis 12 dargestellten Ausführungsbeispiele der Getriebeanordnung 14 soll insbesondere auf deren Unterschiede gegenüber dem ersten, in Fig. 2 bis 5 gezeigten Ausführungsbeispiel eingegangen werden.

Wie der in Fig. 6 gezeigte Ausschnitt aus einem zweiten ausführungsbeispiel der Getriebeanordnung 14 zeigt, kann statt mittels einer Verdrehung der antriebsseitigen Trommeln 20, 22 und/oder der abtriebsseitigen Trommeln 28, 30 gegeneinander, das Spannen des ersten Seils 32 und/oder des zweiten Seils 38 jeweils mittels einer Spannvorrichtung 80 erfolgen, die an dem Antriebskörper 18 und/oder an dem Abtriebskörper 24 angeordnet sein kann. Vorzugsweise ist die Spannvorrichtung 80 in der jeweiligen Rille 72 angeordnet. Besonders bevorzugt ist jeweils eine der Spannvorrichtungen 80 an der ersten abtriebsseitigen Trommel 28 und der zweiten abtriebsseitigen Trommel 30 angeordnet. Die Spannvorrichtung 80 kann zum Spannen jeweiligen Seils 32, 38 eine Spannschraube 82 aufweisen.

Fig. 7 zeigt ein drittes Ausführungsbeispiel der Getriebeanordnung 14, das im Wesentlichen dem in den Fig. 2 bis 5 gezeigten ersten Ausführungsbeispiel entspricht, dessen winkliger Achsversatz 31a im Unterschied zum ersten Ausführungsbeispiel jedoch 60° beträgt.

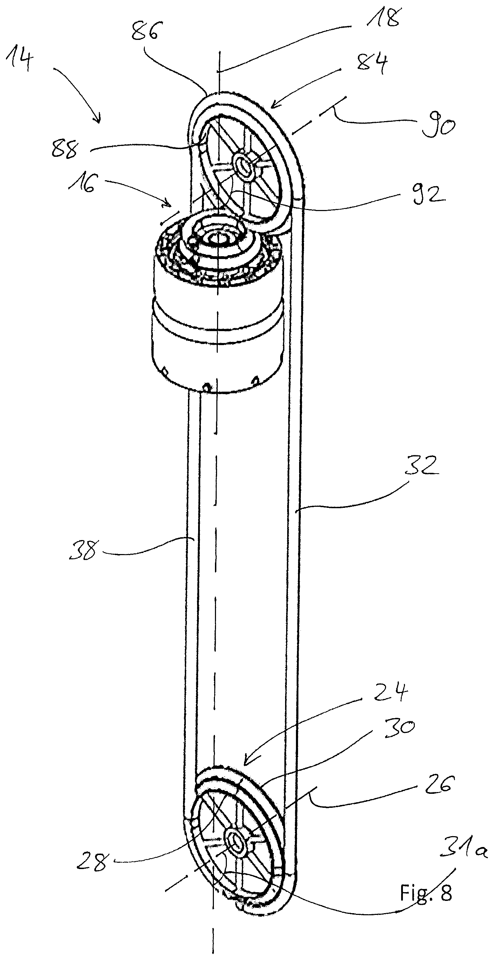

In einem vierten, in Fig. 8 gezeigten Ausführungsbeispiel weist die Getriebeanordnung 14 zusätzlich zu den Merkmalen des ersten Ausführungsbeispiels der Fig. 2 bis 5 vorzugsweise einen Umlenkkörper 84 mit einer ersten umlenkenden Trommel 86 und einer zweiten umlenkende Trommel 88 auf, die jeweils um eine Umlenkachse 90 drehbar angeordnet sein können. Die erste umlenkende Trommel 86 kann dabei so angeordnet sein, dass das erste Seil 32 mit dem ersten Kontaktumfang 60 gleichzeitig an der ersten umlenkenden Trommel 86 und der ersten antriebsseitigen Trommel 20 anliegt. In entsprechender Weise kann die zweite umlenkende Trommel 88 so angeordnet sein, dass das zweite Seil 38 mit dem zweiten Kontaktumfang 62 gleichzeitig an der zweiten umlenkenden Trommel 88 und der zweiten antriebsseitigen Trommel 22 anliegt.

Wie in Fig. 8 gezeigt ist, kann der Umlenkkörper 84 eine räumlich voneinander entfernte Anordnung des Antriebskörpers 16 und des Abtriebskörpers 24 ermöglichen. Sofern die Antriebsachse 18 und die Abtriebsachse 26 einen winkligen Achsenversatz 31a aufweisen, kann die entsprechende Umlenkung der Seile 32, 38 mittels des Umlenkkörpers 84 erfolgen. Die Umlenkachse 90 kann mit der Antriebsachse 18 einen entsprechenden Umlenkwinkel 92 einschließen.

Entsprechend der Ausbildung des Antriebskörpers 16 und des Abtriebskörpers 24 kann die zweite umlenkende Trommel 88 gegenüber der erste umlenkenden Trommel 86 bezüglich der Umlenkachse 90 axial versetzt angeordnet sein. Ebenfalls kann sich der Durchmesser der zweiten umlenkenden Trommel 88 von dem der ersten umlenkenden Trommel 86 unterscheiden, vorzugsweise derart, dass die zweite umlenkende Trommel 88 einen kleineren Durchmesser als die erste umlenkende Trommel 86 aufweist.

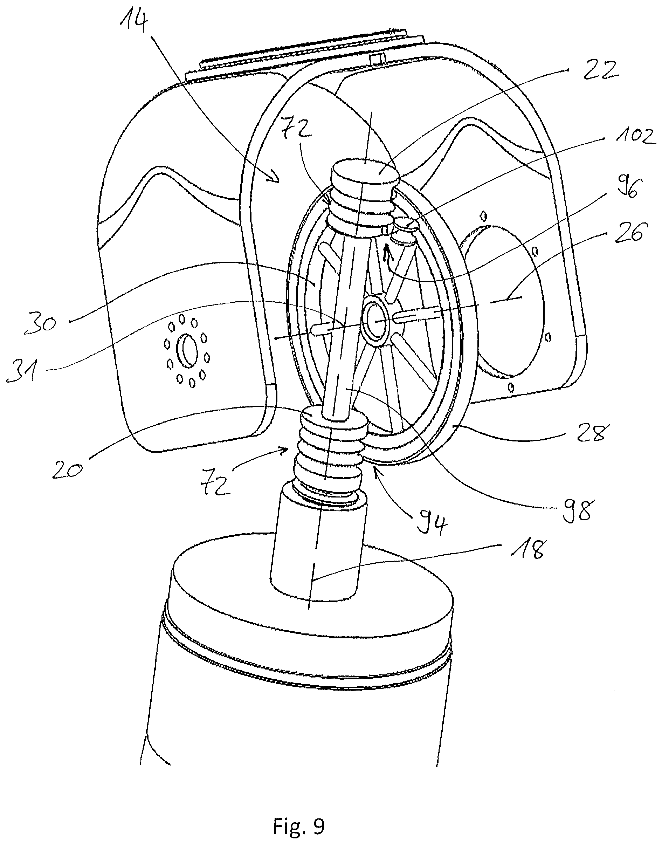

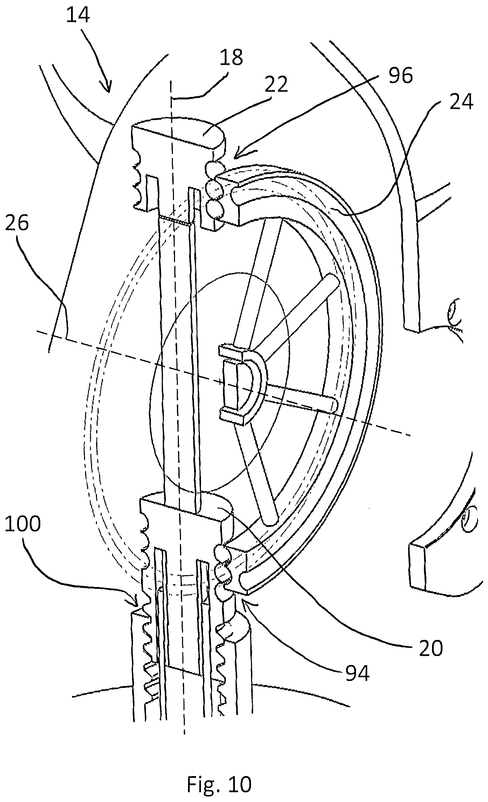

Fig. 9 und 10 zeigen ein fünftes Ausführungsbeispiel der Getriebeanordnung 14. Darin ist die an der ersten antriebsseitigen Trommel 20 und der zweiten antriebsseitigen Trommel 22 angeordnete Rille 72 helixförmig ausgebildet. Dadurch kann ein maximaler Drehwinkel der antriebsseitigen Trommeln 20, 22 von mehr als 360° erreicht werden. Vorzugsweise ist die Öffnung 76 der Rille 72 dabei rechtwinklig zu der Antriebsachse 18 angeordnet, sodass das das erste Seil 32 und das zweite Seil 38 rechtwinklig Antriebsachse 18 in die Rille 72 eingelegt und aus der Rille 72 entnommen werden können.

In den Darstellungen in Fig. 9 **u.** 10 beträgt der Achsenversatz 31a der Abtriebsachse 26 zu der Antriebsachse 18 90°. Außerdem sind die erste antriebsseitige Trommel 20 und die zweite antriebsseitige Trommel 22 bezüglich der Abtriebsachse 26 zueinander um 180° versetzt angeordnet. Durch eine derartige Anordnung der antriebsseitigen Trommeln, kann ein Versatz einer ersten Übergabestelle 94, an der das erste Seil 32 von der ersten antriebsseitigen Trommel 20 an die erste abtriebsseitige Trommel 28 übergeben wird, zu einer zweiten Übergabestelle 96, an der das zweite Seil 38 von der zweiten antriebsseitigen Trommel 22 an die zweite abtriebsseitige Trommel 30 übergeben wird, bezüglich der Abtriebsachse 26 von 180° realisiert werden. Die erste Antriebsseitige Trommel 20 und die zweite antriebsseitige Trommel 22 sind vorzugsweise an einer gemeinsamen Antriebswelle 98 angeordnet, die die Abtriebsachse 26 schneidet.

Wie der Schnittdarstellung in Fig. 10 entnommen werden kann, können die antriebsseitigen Trommeln 20, 22 in Abhängigkeit von einem antriebsseitigen Drehwinkel axial, also entlang der Antriebsachse 18, verschiebbar angeordnet sein. Durch eine derartige Abhängigkeit kann, insbesondere bei einer helixförmigen Ausbildung der Rille 72, ein Übergang der Seile 32, 38 von den antriebsseitigen Trommeln 20, 22 auf die abtriebsseitigen Trommeln 28, 30 und umgekehrt unter Aufrechterhaltung des ersten Kontaktumfangs 60 und des zweiten Kontaktumfangs 62 erfolgen. Die axiale Verschiebbarkeit der antriebsseitigen Trommeln 20, 22 kann mittels einer Schraubenführung 100 realisiert werden. Zur weiteren Sicherstellung eines einwandfreien Übergangs der Seile 32, 38 von den antriebsseitigen Trommeln 20, 22 auf die abtriebsseitigen Trommeln 28, 30 und umgekehrt, kann an der ersten abtriebsseitigen Trommel 28 und an der zweiten abtriebsseitigen Trommel 30 jeweils ein rollenförmiger Niederhalter 102 angeordnet sein, der das erste Seil 32 und das zweite Seil 38 jeweils in der entsprechenden abtriebsseitigen Trommel 28, 30 positionieren kann.

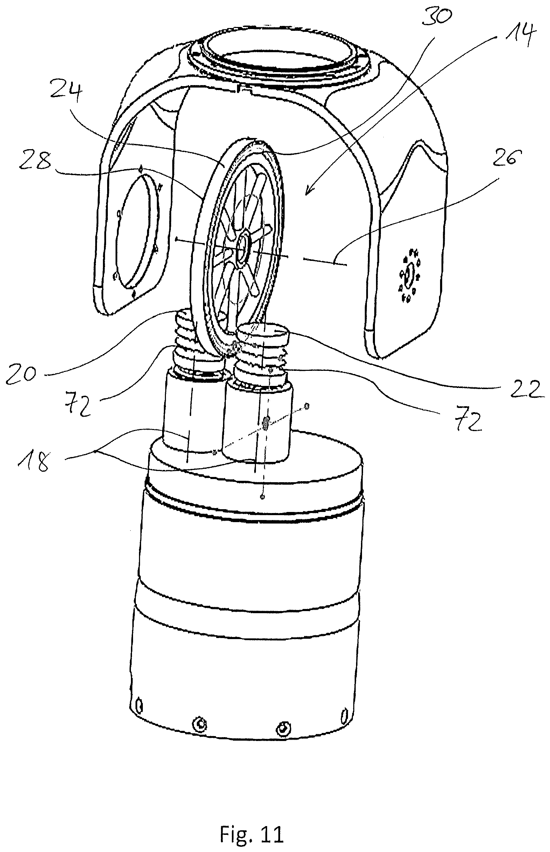

Das in Fig. 11 **u.** 12 gezeigte, sechste Ausführungsbeispiel der Getriebeanordnung 14 unterscheidet sich von dem in den Fig. 9 **u.** 10 gezeigten vor allem darin, dass der Abtriebskörper 24 bezüglich der Abtriebsachse 26 vorzugsweise zwischen der ersten antriebsseitigen Trommel 20 und der zweiten antriebsseitigen Trommel 22 angeordnet ist. Die Trommeln des Abtriebskörpers 24 können dabei bezüglich der Antriebsachse 26 an entgegengesetzten Seiten des Abtriebskörpers 24 angeordnet sein.

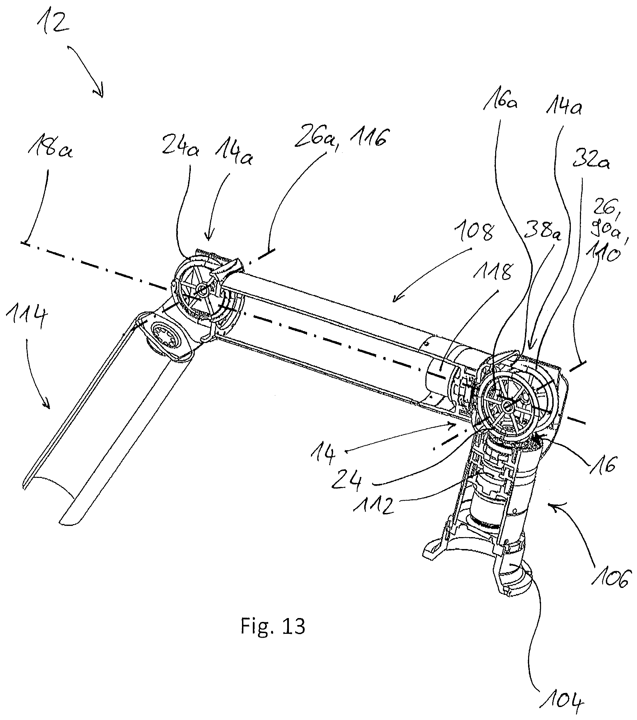

Fig. 13 zeigt ein Ausführungsbeispiel eines Roboters 12 mit einer Getriebeanordnung 14. Der Roboter 12 kann eine Basis 104 und einen Roboterarm 10 mit einem ersten Armabschnitt 106 und einem zweiten Armabschnitt 108 umfassen, wobei der zweite Armabschnitt 108 vorzugsweise um eine erste Knickachse 110 drehbar an dem ersten Armabschnitt 106 angeordnet ist. Der erste Armabschnitt 106 kann an der Basis 104 angeordnet sein. Mittels der Basis 104 kann der Roboterarm 10 gegenüber der Umwelt gelagert sein. In dem ersten Armabschnitt 106 kann der Antriebskörper 16 angeordnet sein. Vorzugsweise ist in dem ersten Armabschnitt 106 ferner eine Antriebseinheit 112 zum Antrieb des Antriebskörpers 16 angeordnet.

In dem zweiten Armabschnitt 108 kann der Abtriebskörper 24 derart angeordnet sein, dass die Abtriebsachse 18 auf der ersten Knickachse 110 liegt. Zur Übertragung der Drehzahl und des Drehmoments von der Antriebseinheit 112 auf den Abtriebskörper 16 kann der Abtriebskörper 16 derart angeordnet sein, dass das erste Seil 32 und das zweite Seil 38 mit dem ersten Kontaktumfang 60 und dem zweiten Kontaktumfang 62 gleichzeitig an den entsprechenden antriebsseitigen Trommeln 20, 22 und den entsprechenden abtriebsseitigen Trommeln 28, 30 anliegen. Die Antriebsachse 18 und die Abtriebsachse 26 können dabei einen Achsenversatz 31a von 90° zueinander aufweisen. Durch eine derartige Anordnung kann die relativ schwere Antriebseinheit 112 in dem basisnahen ersten Armabschnitt 106 angeordnet werden.

Der Roboter 12 kann einen dritten Armabschnitt 114 aufweisen, der um eine zweite Knickachse 116 drehbar an dem zweiten Armabschnitt 108 angeordnet ist. Eine zweite Antriebseinheit 118 kann in dem zweiten Armabschnitt 109 vorzugsweise nahe der ersten Knickachse 110 angeordnet sein. Der Roboter kann eine zweite Getriebeanordnung 14a aufweisen, die einen Umlenkkörper 84a umfasst. Ein zweiter Antriebskörper 16a der zweiten Getriebeanordnung 14a ist vorzugsweise in dem zweiten Armabschnitt 108 an der zweiten Antriebseinheit 118 angeordnet. Ein zweiter Abtriebskörper 24a der zweiten Getriebeanordnung 14a kann derart an dem dritten Armabschnitt 114 angeordnet sein, dass eine zweite Abtriebsachse 26a auf der zweiten Knickachse 116 liegt. Zur Übertragung der Drehzahl und des Drehmoments von der zweiten Antriebseinheit 118 auf den zweiten Abtriebskörper 24a kann der Umlenkkörper 84a derart angeordnet sein, dass ein erstes Seil 32a der zweiten Getriebeanordnung 14a und ein zweites Seil 38a der zweiten Getriebeanordnung 14a mit entsprechenden Kontaktumfängen gleichzeitig an dem Umlenkkörper 84a und dem zweiten Antriebskörper 16a anliegt. Der **Um**lenkkörper 84a kann ferner derart angeordnet sein, dass eine Umlenkachse 90a der zweiten Getriebeanordnung 14a auf der ersten Knickachse 110 liegt. Eine Antriebsachse 18a der zweiten Getriebeanordnung 14a und die Umlenkachse 90a können dabei einen Versatz von 90° zueinander aufweisen. Dadurch dass die zweite Getriebeanordnung 14a den Umlenkkörper 84a aufweist, kann sie die Länge des zweiten Armabschnitts 108 zwischen dem zweiten Antriebskörper 16a und dem zugehörigen zweiten **Ab**triebskörper 24a überbrücken.

### Bezugszeichenliste

- 10: Roboterarm
- 12: Roboter
- 14: Getriebeanordnung
- 14a: zweite Getriebeanordnung
- 16: Antriebskörper
- 16a: zweiter Antriebskörper
- 18: Antriebsachse
- 18a: Antriebsachse der zweiten Getriebeanordnung
- 20: erste antriebsseitige Trommel
- 22: zweite antriebsseitige Trommel
- 24: Abtriebskörper
- 24a: zweiter Abtriebskörper
- 26: Abtriebsachse
- 26a: zweite Abtriebsachse
- 28: erste abtriebsseitige Trommel
- 30: zweite abtriebsseitige Trommel
- 31: Achsenschnittpunkt
- 31a: Achsenversatz
- 32: erstes Seil
- 32a: erstes Seil der zweiten Getriebeanordnung
- 34: erstes antriebsseitiges Seilende
- 36: erstes abtriebsseitiges Seilende
- 38: zweites Seil
- 38a: zweites Seil der zweiten Getriebeanordnung
- 40: zweites antriebsseitiges Seilende
- 42: zweites abtriebsseitiges Seilende
- 44: erste Drehrichtung
- 46: zweite Drehrichtung
- 48: erster abtriebsseitiger Trommeldurchmesser
- 50: erster antriebsseitiger Trommeldurchmesser
- 52: zweiter abtriebsseitiger Trommeldurchmesser
- 54: zweiter antriebsseitiger Trommeldurchmesser
- 56: maximaler antriebsseitiger Drehwinkel
- 58: maximaler abtriebsseitiger Drehwinkel
- 60: erster Kontaktumfang
- 62: zweiter Kontaktumfang
- 64: antriebsseitige Tangente
- 66: Seilmittellinie
- 68: abtriebsseitige Tangente
- 70: Schraubverbindung
- 72: Rille
- 74: Kontur
- 76: Öffnung
- 78: Einstellschraube
- 80: Spannvorrichtung
- 82: Spannschraube
- 84: Umlenkkörper
- 84a: Umlenkkörper der zweiten Getriebeanordnung
- 86: erste umlenkende Trommel
- 88: zweite umlenkende Trommel
- 90: Umlenkachse
- 90a: Umlenkachse der zweiten Getriebeanordnung
- 92: Umlenkwinkel
- 94: erste Übergabestelle
- 96: zweite Übergabestelle
- 98: Antriebswelle
- 100: Schraubenführung
- 102: Niederhalter
- 104: Basis
- 106: erster Armabschnitt
- 108: zweiter Armabschnitt
- 110: erste Knickachse
- 112: Antriebseinheit
- 114: dritter Armabschnitt
- 116: zweite Knickachse
- 118: zweite Antriebseinheit

- 200: Roboterarm (Stand der Technik)
- 202: Getriebeanordnung (Stand der Technik)
- 204: Kegelzahnrad

## Patentansprüche

1. Getriebeanordnung (14, 14a) mit folgenden Merkmalen:
• einem Antriebskörper (16, 16a) mit mindestens einer um eine Antriebsachse (18, 18a) drehbar angeordneten antriebsseitigen Trommel (20, 22),
• einem Abtriebskörper (24, 24a) mit mindestens einer um eine Abtriebsachse (26, 26a) drehbar angeordneten abtriebsseitigen Trommel (28, 30),
• mindestens einem Seil (32, 38), das auf der mindestens einen antriebsseitigen Trommel (20, 22) sowie auf der mindestens einen abtriebsseitigen Trommel (28, 30) aufwickelbar ist, und ein antriebsseitiges Seilende (34, 40) sowie ein abtriebsseitiges Seilende (36, 42) aufweist,
• wobei das antriebsseitige Seilende (34, 40) an der mindestens einen antriebsseitigen Trommel (20, 22) und das abtriebsseitige Seilende (36, 42) an der mindestens einen abtriebsseitigen Trommel (28, 30) angeordnet ist,
**dadurch gekennzeichnet, dass**
die mindestens eine antriebsseitige Trommel (20, 22) in Abhängigkeit von einem antriebsseitigen Drehwinkel und/oder die mindestens eine abtriebsseitige Trommel (28, 30) in Abhängigkeit von einem abtriebsseitigen Drehwinkel axial verschiebbar angeordnet ist.

2. Getriebeanordnung nach Anspruch 1,
**dadurch gekennzeichnet, dass**
das mindestens eine Seil (32, 38) mit einem Kontaktumfang (60, 62) gleichzeitig an der mindestens einen antriebsseitigen Trommel (20, 22) und der mindestens einen abtriebsseitigen Trommel (28, 30) anliegt.

3. Getriebeanordnung nach einem der vorhergehenden Ansprüche,
**dadurch gekennzeichnet, dass**
die Antriebsachse (18, 18a) und die Abtriebsachse (26, 26a) einen winkligen Achsenversatz (31a) zueinander aufweisen.

4. Getriebeanordnung nach einem der vorhergehenden Ansprüche,
**dadurch gekennzeichnet, dass**
das antriebsseitige Seilende (34, 40) an der mindestens einen antriebsseitigen Trommel (20, 22) und/oder das abtriebsseitige Seilende (36, 42) an der mindestens einen abtriebsseitigen Trommel (28, 30) formschlüssig und/oder reibschlüssig befestigt ist.

5. Getriebeanordnung nach einem der vorhergehenden Ansprüche,
**dadurch gekennzeichnet, dass**
die mindestens eine antriebsseitige Trommel (20, 22) und/oder die mindestens eine abtriebsseitige Trommel (28, 30) eine in Umfangsrichtung verlaufende Rille (72) zur Aufnahme des mindestens einen Seils (32, 38) aufweist.

6. Getriebeanordnung nach Anspruch 5,
**dadurch gekennzeichnet, dass**
die Rille (72) an mindestens einer der mindestens einen antriebsseitigen Trommel (20, 22) und/oder der mindestens einen abtriebsseitigen Trommel (28, 30) helixförmig ausgebildet ist.

7. Getriebeanordnung nach einem der vorhergehenden Ansprüche,
**dadurch gekennzeichnet, dass**
an dem Antriebskörper (16, 16a) und/oder an dem Abtriebskörper (24, 24a) eine Spannvorrichtung (80) zum Spannen des mindestens einen Seils (32, 38) angeordnet ist.

8. Getriebeanordnung nach einem der vorhergehenden Ansprüche,
**dadurch gekennzeichnet, dass**
ein Umlenkkörper (84, 84a) mit mindestens einer um eine Umlenkachse (90, 90a) drehbaren umlenkenden Trommel (86, 88) derart angeordnet ist, dass das mindestens eine Seil (32, 38) mit einem Kontaktumfang (60, 62) gleichzeitig an der mindestens einen umlenkenden Trommel (86, 88) und der mindestens einen antriebsseitigen Trommel (20, 22) oder der mindestens einen umlenkenden Trommel (86, 88) und der mindestens einen abtriebsseitigen Trommel (28, 30) anliegt.

9. Getriebeanordnung nach einem der vorhergehenden Ansprüche,
**dadurch gekennzeichnet, dass**
• der Antriebskörper (16, 16a) eine erste antriebsseitige Trommel (20) und eine zweite antriebsseitige Trommel (22) aufweist, die jeweils der mindestens einen antriebsseitigen Trommel (20, 22) entsprechen,
• der Abtriebskörper (24, 24a) eine erste abtriebsseitige Trommel (28) und eine zweite abtriebsseitige Trommel (30) aufweist, die jeweils der mindestens einen abtriebsseitigen Trommel (28, 30) entsprechen,
• die Getriebeanordnung (14, 14a) ein dem mindestens einen Seil (32, 38) entsprechendes erstes Seil (32) sowie ein dem mindestens einen Seil (32, 38) entsprechendes zweites Seil (38) aufweist, wobei das erste Seil (32) mit den ersten Trommeln (20, 28, 86) und das zweite Seil (38) mit den zweiten Trommeln (22, 30, 88) in Wirkverbindung steht.

10. Getriebeanordnung nach Anspruch 9,
**dadurch gekennzeichnet, dass**
zumindest eine der zweiten Trommeln (22, 30, 88) gegenüber der entsprechenden ersten Trommel (20, 28, 86) axial versetzt angeordnet ist und/oder zumindest eine der zweiten Trommeln (22, 30, 88) einen anderen Durchmesser als die entsprechende erste Trommel (20, 28, 86) aufweist.

11. Getriebeanordnung nach einem der Ansprüche 9 bis 10,
**dadurch gekennzeichnet, dass**
das erste Seil (32) und das zweite Seil (38) bezüglich der Antriebsachse (18, 18a) gegensinnig an dem Antriebskörper (16, 16a) und/oder bezüglich der Abtriebsachse (26, 26a) gegensinnig an dem Abtriebskörper (24, 24a) angeordnet sind.

12. Getriebeanordnung nach einem der Ansprüche 9 bis 11,
**dadurch gekennzeichnet, dass**
die antriebsseitigen Trommeln (20, 22) und/oder die abtriebsseitigen Trommeln (28, 30) gegeneinander verdrehbar angeordnet sind.

13. Getriebeanordnung nach einem der Ansprüche 9 bis 12,
**dadurch gekennzeichnet, dass**
die erste antriebsseitige Trommel (20) und die zweite antriebsseitige Trommel (22) bezüglich der Abtriebsachse (26, 26a) und/oder die erste abtriebsseitige Trommel (28) und die zweite abtriebsseitige Trommel (30) bezüglich der Antriebsachse (18, 18a) zueinander um 180° versetzt angeordnet sind.

14. Getriebeanordnung nach einem der Ansprüche 9 bis 13,
**dadurch gekennzeichnet, dass** der Antriebskörper (16, 16a) bezüglich der Antriebsachse (18, 18a) zwischen der ersten abtriebsseitigen Trommel (28) und der zweiten abtriebsseitigen Trommel (30) angeordnet ist und/oder der Abtriebskörper (24, 24a) bezüglich der Abtriebsachse (26, 26a) zwischen der ersten antriebsseitigen Trommel (20) und der zweiten antriebsseitigen Trommel (22) angeordnet ist.

15. Roboter (12) mit einer Getriebeanordnung (14, 14a) nach einem der vorhergehenden Ansprüche.

## Claims

1. Transmission arrangement (14, 14a) comprising the following features:
• an input body (16, 16a) having at least one input-side drum (20, 22) arranged so as to be rotatable about an input axis (18, 18a),
• an output body (24, 24a) having at least one output-side drum (28, 30) arranged so as to be rotatable about an output axis (26, 26a),
• at least one rope (32, 38) which can be wound onto the at least one input-side drum (20, 22) as well as onto the at least one output-side drum (28, 30), and which has an input-side rope end (34, 40) and an output-side rope end (36, 42),
• wherein the input-side rope end (34, 40) is arranged on the at least one input-side drum (20, 22) and the output-side rope end (36, 42) is arranged on the at least one output-side drum (28, 30),
**characterized in that**
the at least one input-side drum (20, 22) is arranged so as to be axially displaceable as a function of an input-side angle of rotation and/or the at least one output-side drum (28, 30) is arranged so as to be axially displaceable as a function of an output-side angle of rotation.

2. Transmission arrangement according to claim 1,
**characterized in that**
the at least one rope (32, 38) bears simultaneously against the at least one input-side drum (20, 22) and the at least one output-side drum (28, 30) with a contact circumference (60, 62).

3. Transmission arrangement according to any one of the preceding claims,
**characterized in that**
the input axis (18, 18a) and the output axis (26, 26a) have an angular axis offset (31a) relative to one another.

4. Transmission arrangement according to any one of the preceding claims,
**characterized in that**
the input-side rope end (34, 40) is fastened to the at least one input-side drum (20, 22) and/or the output-side rope end (36, 42) is fastened to the at least one output-side drum (28, 30) in a form-locking and/or force-locking manner.

5. Transmission arrangement according to any one of the preceding claims,
**characterized in that**
the at least one input-side drum (20, 22) and/or the at least one output-side drum (28, 30) has a groove (72) extending in the circumferential direction for receiving the at least one rope (32, 38).

6. Transmission arrangement according to claim 5,
**characterized in that**
the groove (72) is formed helically on at least one of the at least one input-side drum (20, 22) and/or the at least one output-side drum (28, 30).

7. Transmission arrangement according to any one of the preceding claims,
**characterized in that**
a tensioning device (80) for tensioning the at least one rope (32, 38) is arranged on the input body (16, 16a) and/or on the output body (24, 24a).

8. Transmission arrangement according to any one of the preceding claims,
**characterized in that**
a deflection body (84, 84a) having at least one deflecting drum (86, 88) rotatable about a deflection axis (90, 90a) is arranged in such a manner that the at least one rope (32, 38) bears simultaneously against the at least one deflecting drum (86, 88) and the at least one input-side drum (20, 22) or against the at least one deflecting drum (86, 88) and the at least one output-side drum (28, 30) with a contact circumference (60, 62).

9. Transmission arrangement according to any one of the preceding claims,
**characterized in that**
the input body (16, 16a) has a first input-side drum (20) and a second input-side drum (22), each corresponding to the at least one input-side drum (20, 22), the output body (24, 24a) has a first output-side drum (28) and a second output-side drum (30), each corresponding to the at least one output-side drum (28, 30), the transmission arrangement (14, 14a) has a first rope (32) corresponding to the at least one rope (32, 38) and a second rope (38) corresponding to the at least one rope (32, 38), wherein the first rope (32) is operatively connected to the first drums (20, 28, 86) and the second rope (38) is operatively connected to the second drums (22, 30, 88).

10. Transmission arrangement according to claim 9,
**characterized in that**
at least one of the second drums (22, 30, 88) is arranged axially offset relative to the corresponding first drum (20, 28, 86) and/or at least one of the second drums (22, 30, 88) has a different diameter than the corresponding first drum (20, 28, 86).

11. Transmission arrangement according to any one of claims 9 to 10,
**characterized in that**
the first rope (32) and the second rope (38) are arranged in opposite directions on the input body (16, 16a) with respect to the input axis (18, 18a) and/or are arranged in opposite directions on the output body (24, 24a) with respect to the output axis (26, 26a).

12. Transmission arrangement according to any one of claims 9 to 11,
**characterized in that**
the input-side drums (20, 22) and/or the output-side drums (28, 30) are arranged so as to be rotatable relative to one another.

13. Transmission arrangement according to any one of claims 9 to 12,
**characterized in that**
the first input-side drum (20) and the second input-side drum (22) are arranged offset relative to one another by 180° with respect to the output axis (26, 26a) and/or the first output-side drum (28) and the second output-side drum (30) are arranged offset relative to one another by 180° with respect to the input axis (18, 18a).

14. Transmission arrangement according to any one of claims 9 to 13,
**characterized in that**
the input body (16, 16a) is arranged between the first output-side drum (28) and the second output-side drum (30) with respect to the input axis (18, 18a) and/or the output body (24, 24a) is arranged between the first input-side drum (20) and the second input-side drum (22) with respect to the output axis (26, 26a).

15. Robot (12) having a transmission arrangement (14, 14a) according to any one of the preceding claims.

## Revendications

1. Ensemble (14, 14a) de transmission ayant les caractéristiques suivantes :
• un corps (16, 16a) d'entraînement ayant au moins un tambour (20, 22) du côté de l'entraînement, monté tournant autour d'un axe (18, 18a) d'entraînement,
• un corps (24, 24a) de sortie ayant au moins un tambour (28, 30) du côté de la sortie, monté tournant autour d'un axe (26, 26a) de sortie,
• au moins un câble (32, 38), qui peut être enroulé sur au moins un tambour (20, 22) du côté de l'entraînement ainsi que sur au moins un tambour (28, 30) du côté de la sortie et qui a un bout (34, 40) de câble du côté de l'entraînement ainsi qu'un bout (36, 42) de câble du côté de la sortie,
• dans lequel le bout (34, 40) de câble du côté de l'entraînement est disposé sur au moins un tambour (20, 22) du côté de l'entraînement et le bout (36, 42) de câble du côté de la sortie est disposé sur au moins un tambour (28, 30) du côté de la sortie,
**caractérisé en ce que**
le au moins un tambour (20, 22) du côté de l'entraînement est monté coulissant axialement en fonction d'un angle de rotation du côté de l'entraînement et/ou le au moins un tambour (28, 30) du côté de la sortie est monté coulissant axialement en fonction d'un angle de rotation du côté de la sortie.

2. Ensemble de transmission suivant la revendication 1,
**caractérisé en ce que**
le au moins un câble (32, 38) s'applique par un pourtour (60, 62) de contact simultanément au au moins au tambour (20, 22) du côté de l'entraînement et au au moins un tambour (28, 30) du côté de la sortie.

3. Ensemble de transmission suivant l'une des revendications précédentes,
**caractérisé en ce que**
l'axe (18, 18a) d'entraînement et l'axe (26, 26a) de sortie ont, entre eux, un décalage (31a) angulaire.

4. Ensemble de transmission suivant l'une des revendications précédentes,
**caractérisé en ce que**
le bout (34, 40) de câble du côté de l'entraînement est fixé à complémentarité de forme et/ou à frottement au au moins un tambour (20, 22) du côté de l'entraînement et/ou le bout (36, 42) de câble du côté de la sortie est fixé à complémentarité de forme et/ou par frottement au au moins un tambour (28, 30) du côté de la sortie.

5. Ensemble de transmission suivant l'une des revendications précédentes,
**caractérisé en ce que**
le au moins un tambour (20, 22) du côté de l'entraînement et/ou le au moins un tambour (28, 30) du côté de la sortie a une rainure (72) s'étendant dans la direction périphérique pour la réception du au moins un câble (32, 38).

6. Ensemble de transmission suivant la revendication 5,
**caractérisé en ce que**
la rainure (72) est constituée en forme d'hélice sur au moins l'un des au moins un tambour (20, 22) du côté de l'entraînement et/ou des au moins un tambour (28, 30) du côté de la sortie.

7. Ensemble de transmission suivant l'une des revendications précédentes,
**caractérisé en ce que**
sur le corps (16, 16a) d'entraînement et/ou le corps (24, 24a) de sortie est disposé un dispositif (80) tendeur pour tendre le au moins un câble (32, 38).

8. Ensemble de transmission suivant l'une des revendications précédentes,
**caractérisé en ce que**
un corps (84, 84a) de déviation, ayant au moins un tambour (86, 88) de déviation pouvant tourner autour d'un axe (90, 90a) de déviation, est disposé de manière à ce que le au moins un câble (32, 38) s'applique par un pourtour (60, 62) de contact simultanément à le au moins un tambour (86, 88) de déviation et à le au moins un tambour (20, 22) du côté de l'entraînement ou à le au moins un tambour (86, 88) de déviation et à le au moins un tambour (28, 30) du côté de la sortie.

9. Ensemble de transmission suivant l'une des revendications précédentes,
**caractérisé en ce que**
• le corps (16, 16a) d'entraînement a un premier tambour (20) du côté de l'entraînement et un deuxième tambour (22) du côté de la sortie, qui correspondent respectivement à le au moins un tambour (20, 22) du côté de l'entraînement,
• le corps (24, 24a) de sortie a un premier tambour (28) du côté de la sortie et un deuxième tambour (30) du côté de la sortie, qui correspondent respectivement à le au moins un tambour (28, 30) du côté de la sortie,
• l'ensemble (14, 14a) d'entraînement a un premier câble (32) correspondant à le au moins un câble (32, 38) ainsi qu'un deuxième câble (38) correspondant à le au moins un câble (32, 38) dans lequel le premier câble (32) est en liaison d'action avec les premiers tambours (20, 28, 86) et le deuxième câble (38) avec les deuxièmes tambours (22, 30, 88).

10. Ensemble de transmission suivant la revendication 9,
**caractérisé en ce que**
au moins l'un des deuxièmes tambours (22, 30, 88) est décalé axialement par rapport aux premiers tambours (20, 28, 86) correspondants et/ou au moins l'un des deuxièmes tambours (22, 30, 88) a un diamètre autre que les premiers tambours (20, 28, 86) correspondants.

11. Ensemble de transmission suivant l'une des revendications 9 à 10,
**caractérisé en ce que**
le premier câble (32) et le deuxième câble (38) sont disposés par rapport à l'axe (18, 18a) d'entraînement, en sens contraire sur le corps (16, 16a) d'entraînement et/ou, par rapport à l'axe (26, 26a) de sortie, en sens contraire sur le corps (24, 24a) de sortie.

12. Ensemble de transmission suivant l'une des revendications 9 à 11,
**caractérisé en ce que**
les tambours (20, 22) du côté de l'entraînement et/ou les tambours (28, 30) du côté de la sortie sont disposés tournants les uns par rapport aux autres.

13. Ensemble de transmission suivant l'une des revendications 9 à 12,
**caractérisé en ce que**
le premier tambour (20) du côté de l'entraînement et le deuxième tambour (22) du côté de l'entraînement sont, par rapport à l'axe (26, 26a) d'entraînement et/ou le premier tambour (28) du côté de la sortie et le deuxième tambour (30) du côté de la sortie, décalés par rapport à l'axe (18, 18a) d'entraînement l'un de l'autre de 180°.

14. Ensemble de transmission suivant l'une des revendications 9 à 13,
**caractérisé en ce que**
le corps (16, 16a) d'entraînement est, par rapport à l'axe (18, 18a) d'entraînement, disposé entre le premier tambour (28) du côté de la sortie et le deuxième tambour (30) du côté de la sortie et/ou le corps (24, 24a) d'entraînement est, par rapport à l'axe (26, 26a) de sortie, disposé entre le premier tambour (20) du côté de l'entraînement et le deuxième tambour (22) du côté de l'entraînement.

15. Robot (12) ayant un ensemble (14, 14a) de transmission suivant l'une des revendications précédentes.
